# EUROPEAN PATENT APPLICATION

(11) **EP 4 057 196 A1**
(43) Date of publication of application: **14.09.2022**
(21) Application number: 21162469.7
(22) Date of filing: 13.03.2021
(51) Int. Cl.: G06Q 10/06

(54) **CO-REMOTE WORKING SESSION SCHEDULING**

(71) Applicant: Lioumbis, Alexandros, 44200 Nantes (FR)
(72) Inventor: Lioumbis, Alexandros, 44200 Nantes (FR)

(57) **Abstract**

Methods and devices of organizing co-remote working sessions between individuals are disclosed. A co-remote working session scheduler comprises a transceiver to receive co-remote working session messages from host and guest users and transmit co-remote working session match messages, a message manager to store and retrieve messages stored in a memory, a message comparator to perform comparisons between received co-remote working session messages and co-remote working session messages retrieved from the memory and generate compatibility scores based on said comparisons, and a match message generator coupled to the message comparator to generate co-remote working session match messages based on said compatibility scores.

## Description

### FIELD OF THE INVENTION

The present disclosure relates to systems and methods for scheduling co-remote working sessions.

### BACKGROUND

Telecommuting, also called "remote working", "telework", "teleworking", "working from home" ("WFH"), "mobile work", "remote job", "work from anywhere" (WFA), and "flexible workplace", is a work arrangement in which employees do not commute or travel (e.g., by bus, bicycle, car etc.) to a central place of work, such as an office building, warehouse, or store.

A person who telecommutes is known as a "telecommuter", "teleworker", "remote worker" and sometimes as a "home-sourced", "homeworker" or "work-at-home" employee. A telecommuter is also called a "telecommuting specialist", as a designation and in a professional context. Many telecommuters work from home, while others, sometimes called "nomadic workers" work at coffee shops or other locations.

The concepts of "telecommuting" and "telework" are closely related. However, there is a difference between the two. All types of technology-assisted work conducted outside a centrally located workspace (including work undertaken in the home, outside calls, etc.) are regarded as telework. Telecommuters often maintain a traditional office and usually work from an alternative work site from one to three days a week. Telecommuting refers more specifically to work undertaken at a location that reduces commuting time. These locations can be inside the home or at some other remote workplace, which is facilitated through broadband connections, computer or phone lines, or any other electronic media used to interact and communicate. As a broader concept than telecommuting, telework has four dimensions in its definitional framework: work location, that can be anywhere outside a centralized organizational work place; usage of information and communication technologies (ICTs) as technical support for telework; time distribution, referring to the amount of time replaced in the traditional workplace; and the diversity of employment relationships between employer and employee, ranging from contract work to traditional full-time employment.

In 2020, due to the COVID-19 pandemic, many companies mandated employees to work from home. Some companies allowed workers to telecommute through the rest of the year and into 2021, while other companies allowed their employees to do so on a permanent basis. Some even offered reimbursement for employees to improve their home offices. The COVID-19 pandemic also affected all forms of education, transforming schools and universities into online learning. Some schools and colleges attempted to adapt by incorporating technology into the classroom, so that the classroom could be anywhere. At the end of 2020, close to 40% of those working in the EU began to telework full time as a result of the COVID-19 pandemic.

According to various studies, those who telecommute tend to work, on average, longer hours than those who work at an office. The telecommuters are also perceived more productive and happier according to various studies. Furthermore, substantial savings are reported for both companies and telecommuters as a result of telecommuting.

Despite the productivity gains and cost savings associated with remote work, many companies worry that those advantages come at the expense of remote workers' emotional health -- in particular, that remote work causes loneliness and isolation. Ultimately, it's feared, remote workers' engagement and productivity may suffer. Furthermore, although the quitting rate decreases for telecommuters, the promotion rate also decreases. Many telecommuters may be asked to be back in the office at some point with reasoning like loneliness and desire for promotion.

Coworking and coworking spaces provide for a communal, economical use of an apportioned space and shared equipment and utilities. Yet, coworking itself is more than the physical division of a workspace and finds its primary attractiveness, among independent contractors, telecommuters and travelers, alike, through the establishment of a coworking "society" or cooperative "community" in which space is utilized economically and with the greatest utility.

Coworking originated as a means to maximize the usefulness of a space without undertaking long term lease commitments, incurring related permanent occupancy expenses and requirements of continued and continual residence. Yet, coworking spaces provide more than simply cost-efficient use of a space and advantages can manifest themselves in a myriad of gains including networking, collaboration, increased productivity and efficiency and, in most cases, access to amenities that wouldn't otherwise be unavailable to consumers without a permanent workspace.

At present, companies can select between any of the above models, namely office-working, working-from-home or coworking spaces depending on the job requirements, the social framework and the space constraints. A company may decide to downsize the available workspace of their offices, cancel individual offices or desks or permanently require some of its employees to work from home in order to reduce costs associated with office space. However, the reversibility of such a decision may be complicated, costly and emotionally stressing for many employees.

Furthermore, some employees may prefer to have a mixed ("flexible") arrangement, enjoying the benefits of working-from-home some days or extended periods of time and joining their colleagues in the office for face-to-face meetings and interactions some other days or periods of time.

In short, working from home has the benefits of increased privacy and concentration but the disadvantages of isolation, loneliness, and lack of interpersonal and social interaction. Coworking spaces still require commuting or traveling and are not suited for businesses with established office locations. In flex-work arrangements employees may need to give up their private offices so that the company can reorganize space and reduce costs by reducing the square meters per employee.

It would be desirable to have a system and method that at least partially resolves the above-mentioned disadvantages.

### Summary of the invention

The present disclosure solves the aforementioned problems by introducing the concept of co-remote working sessions. A co-remote working session is defined as a meeting or period devoted to by two or more remote workers for co-working, i.e., working together, at the same location, said same location being a workspace offered by one of the remote workers. Typically, such a workspace will be at the home of one of the remote workers. However, other workspaces owned, rented or lawfully occupied by one of the remote workers may also be suitable for such co-remote working sessions.

The examples of the present invention that are described hereinbelow provide computing devices, methods and corresponding computer programs for scheduling co-remote working sessions.

In a first aspect, a method of organizing co-remote working sessions between individuals is provided. The method comprises: receiving at a co-remote working session scheduler a first co-remote working session message from a first terminal of a first user, said co-remote working session message comprising: (i) first user data, (ii) first co-remote working session space and time data, and (iii) first desired co-remote working user data; comparing said received first co-remote working session message data with data from one or more other co-remote working session messages; identifying a second co-remote working session message transmitted to the scheduler from a second terminal of a second user, said second co-remote working session message comprising (i) second user data, (ii) second co-remote working session space and time data, and (iii) second desired co-remote working user data, said second co-remote working session message having data compatible with said first co-remote working session message; generating a match between said first co-remote working session message and said identified second co-remote working session message; transmitting from the co-remote working session scheduler a co-remote working session match message to at least one of the first and second users.

The method allows for matching of users having messages with compatible characteristics and session creation in a safe and private manner. Only users meeting each other's criteria are matched and users are notified and become aware of their counterpart only after a match is performed. Unlike other matching methods, the proposed method generates matches if all criteria are met and does not allow browsing of offers and requests, thus protecting the privacy of the users.

In a particular embodiment, the first co-remote working session message comprises a host offer message transmitted by a host terminal of a host user offering the co-remote working session, wherein the first user data includes data pertaining to the host user. The first co-remote working session space data comprises data pertaining to an offered space for the co-remote working session and the first co-remote working session time data comprises data indicating when the offered space is available for the co-remote working session. Finally, the first desired co-remote working user data comprises data pertaining to a desired guest user to be hosted by the host user in the offered space during the co-remote working session.

A host user is a user offering workspace and providing characteristics of the workspace as well as characteristics of the desired guest. Thus, the scheduler will generate a match and allow a corresponding session only with guests meeting said criteria proposed by the host user offering the co-remote working session.

In a particular embodiment, the first co-remote working session message comprises a guest request message transmitted by a guest terminal of a guest user requesting the co-remote working session. The first user data includes data pertaining to the guest user, the first co-remote working session space data comprises data pertaining to desired space for the co-remote working session and the first co-remote working session time data comprises data indicating when the offered space is available for the co-remote working session. Finally, the first desired co-remote working user data comprises data pertaining to a desired host user offering the desired space during the co-remote working session.

Accordingly, a guest user is a user requesting workspace and providing characteristics of the desired workspace as well as characteristics of the desired host. Thus, the scheduler will generate a match and allow a corresponding session only with hosts meeting said criteria proposed by the guest user requesting the co-remote working session.

In a particular embodiment, said one or more other co-remote working session messages are retrieved by the co-remote working session scheduler from a local or remote working storage memory. The memory may store such messages until a match is performed or for a predetermined time.

In a particular embodiment comparing the first co-remote working session message with the second co-remote working session message comprises: comparing the first user data with the second desired co-remote working user data to generate a first compatibility score; comparing the first co-remote working session space and time data with the second co-remote working session space and time data to generate a second compatibility score, and comparing the first desired co-remote working user data with the second user data to generate a third compatibility score. The first co-remote working session message is identified as compatible with the second co-remote working session message when each of the first, second and third compatibility scores exceeds a first, second and third predefined thresholds, respectively. Said first and second messages form a first pair of messages and an overall first pair compatibility score is generated as a function of the first, second and third compatibility scores of the first and second messages.

In a particular embodiment, the method further comprises identifying a third co-remote working session message having data compatible with said first co-remote working session message, said first and third messages forming a second pair of messages and an overall second pair compatibility score is generated as a function of the first, second and third compatibility scores of the first and third messages. Generating a match may then comprise generating a match between the first message and the message with the highest overall compatibility score.

In a second aspect, a co-remote working session scheduler comprises: a transceiver to receive co-remote working session messages from host and guest messages and transmit co-remote working session match messages; a message retriever to retrieve messages stored in a memory; a message comparator to perform comparisons between received co-remote working session messages and co-remote working session messages retrieved from the memory and generate compatibility scores based on said comparisons; and a match message generator coupled to the message comparator to generate co-remote working session match messages based on said compatibility scores.

In a particular embodiment, the co-remote working session scheduler further comprises the memory to store the co-remote working session messages. The co-remote working session scheduler may further comprise a first database to store the co-remote working session messages, and/or a second database to store user data and/or co-remote working session space data, and/or a third database to store co-remote working session rules.

In a company with a large percentage of employees working remotely, some employees may have difficulty working from their own place or finding a place to work. Employees or remote workers who have spare capacity in their houses (for some hours or for entire working days) may login to the scheduling system and inform the system about such spare capacity by sending a co-remote working session host offer message (HOM).

For example, an employee may log-in to the system and indicate that (s)he has the capacity to accommodate one co-worker in his/her house during the morning or the afternoon of a specific date. Another employee looking for a place to work, may log-in to the system and indicate, by sending a co-remote working session guest request message (GRM) that (s)he needs a place to work during the corresponding hours. The scheduling system will then match the two employees and inform both about the matching.

Users of the system may also send offer-request messages (ORM). An ORM may indicate that a user is offering to host users meeting certain criteria but is also willing to take part in a co-remote working session as a guest, assuming the host meets said certain criteria.

Similarly, the system may allow for meetings to be held. For example, a group of 4 employees may need to physically meet for 2 hours. They log the request and the system finds a corresponding house where the host has indicated space availability for 4 people during the 2 hours in question.

Although the system is envisaged for the same company, it might also work in an open scenario with employees from connected companies, companies having agreed to participate in the sessions or with freelancers.

Each user participating in the system creates a user profile. Each profile contains attributes pertaining to the user. Such attributes may be related to the user or to affiliations of the user. For example, the user profile may include the user's age, gender, address (user attributes) and also the user's company, department, group, professional role etc. (affiliation attributes).

A user acting as a host may prepare and send a co-remote working host offer message. The co-remote working HOM may comprise four parts. A first part linked to the host's user profile. Typically, it will include the user attributes and one or more of the user's affiliations. A second part may indicate times/dates where the offer is valid. A third part may be linked to the offered space profile (e.g. address of the offered space and characteristics of the offered space). The fourth part may include attributes desired by the guest. Thus, the fourth part may indicate what type of guests are welcome. For example, the guest attributes may indicate that the co-remote working offer is limited to guests from a particular gender, company and/or department.

In a similar way, a co-remote working session GRM may comprise four parts. A first part may be linked to the guest's user profile. Typically, it will include the guest's user attributes and one or more of the user's affiliations. The second part may indicate times/dates when the request is valid for. The third part may be linked to the desired (work)space. For example, it may indicate area (e.g., city, suburb, Postal Code, distance from guest's home etc.) of the desired space. The fourth part may include attributes desired for the host. Thus, the fourth part may determine what type of hosts are acceptable. For example, the host attributes may indicate that the co-remote working guest request is intended for hosts from a particular gender, company and/or department etc..

An ORM message may be a hybrid of a HOM and GRM message. An ORM message may also comprise four parts. A first part may be linked to the sender user's profile. As with the previous cases, it will include the user's attributes and one or more of the user's affiliations. The second part may indicate times/dates where the session offer-request is valid for. The third part may be linked to the offered and/or desired space. For example, it may indicate address of the offered space and characteristics of the offered space and, additionally, characteristics (e.g. city, suburb, Postal Code, distance from user's home etc.) of the desired space. The fourth part may include attributes desired for the desired co-remote worker (guest or host) as indicated above with reference to the HOM and GRM messages.

When a co-remote working host offer is introduced in the scheduling system, only matching prospective guests may receive it. Accordingly, when a co-remote working guest request is introduced in the system, only matching prospective hosts may receive it. In case of co-remote offer-requests, the user may indicate preference (whether "offer" should take priority to "request" and vice versa) and the system will match prospective co-remote workers accordingly. If the ORM message indicates an "offer" priority, then the system will look first for matching prospective guests. If the ORM message indicates a "request" priority, then the system will look first for matching prospective hosts. If no priority is indicated the system may randomly match hosts or guests meeting the criteria.

The system may provide prospective matches which may need to be confirmed by the implicated users (host and guest). Such confirmation may be automatic if the concerned users have opted for automatic confirmation in case of an attribute match.

In one implementation, each HOM or GRM is in a form of a packet string. Each packet string may comprise tags, each tag corresponding to an attribute. Each tag may then comprise an activation bit, indicating whether the corresponding tag is to be used as part of a HOM or a GRM. Thus, the system may be aware at any point as to the complete attributes of the users.

In a particular implementation, a company may limit usage of the system to only employees of affiliated companies, employees of the same company, employees of a department, employees belonging to a particular group (e.g. office employees for whom remote working is permissible) etc.. In such a case, all HOM and GRM may be administered through the company and the company may indicate that some tags need to be activated/disactivated for selected users or for all users during particular days or hours of the day.

For example, a company may require that all users accept only colleagues of the same department for co-remote working sessions. Thus, a corresponding "Department" tag may be activated by default when a HOM is dispatched by a prospective host and only users belonging to the same department may receive and potentially accept it.

According to another aspect, the present invention relates to a non-transitory computer readable medium having recorded thereon a computer readable program code (or computer program) including instructions for executing the steps of the method of the invention as defined in the present disclosure.

The computer program of the invention can be expressed in any programming language, and can be in the form of source code, object code, or any intermediary code between source code and object code, such that in a partially-compiled form, for instance, or in any other appropriate form.

The invention also provides a computer program as mentioned above.

The non-transitory computer readable medium previously mentioned can be any entity or device capable of storing the computer program. For example, the recording medium can comprise a storing means, such as a ROM memory (a CD-ROM or a ROM implemented in a microelectronic circuit), or a magnetic storing means such as a floppy disk or a hard disk for instance.

The non-transitory computer readable medium of the invention can correspond to a transmittable medium, such as an electrical or an optical signal, which can be conveyed via an electric or an optic cable, or by radio or any other appropriate means. The computer program according to the disclosure can in particular be downloaded from the Internet or a network of the like.

Alternatively, the non-transitory computer readable medium can correspond to an integrated circuit in which a computer program is loaded, the circuit being adapted to execute or to be used in the execution of the methods of the invention.

In a particular embodiment, the invention relates to a non-transitory computer readable medium having a computer readable program code embodied therein, said computer readable program code being adapted to be executed to implement a method on a computing device as defined in the present document, the computing device comprising a processor for executing the steps of said method.

### Brief description of the drawings

The present system and method will be more fully understood from the following detailed description of the examples thereof, taken together with the drawings. In the drawings like reference numerals depict like elements. In the drawings:
**Fig. 1a** schematically illustrates a Co-Remote Working Session scheduling and reservation example scenario;
**Fig. 1b** schematically illustrates a Co-Remote Working Session Matching process, according to an example;
**Fig. 1c** schematically illustrates a Co-Remote Working Session generation, according to an example;
**Fig. 1d** schematically illustrates a co-remote working session scheduling system, according to an example.
**Fig. 2** schematically illustrates a Match Space as an intersection of Host Offers with Guest Requests;
**Fig. 3a** schematically illustrates an example of a Host Offer Message;
**Fig. 3b** schematically illustrates an example of a Guest Request Message;
**Fig. 4** schematically illustrates a multi-part tag of a message, according to an example;
**Fig. 5** schematically illustrates a Message Matching Process Configuration, according to an example;
**Fig. 6** schematically illustrates different possible affiliation levels for Users, Desired Host Profiles and Desired Guest Profiles, according to an example;
**Fig. 7** schematically illustrates different possible Privacy Levels for Offered Space Profiles and Desired Space Profiles, according to an example;
**Fig. 8** schematically illustrates a method of creating a Co-Remote Working Session, according to an example;
**Fig. 9a** schematically illustrates an instance of the Co-Remote working Session User application, according to an example;
**Fig. 9b** schematically illustrates a Host Offer generation instance of a Co-Remote working Session User application, according to an example;
**Fig. 10** schematically illustrates a central administration set-up of the system, according to an example;
**Fig. 11** schematically illustrates a Co-Remote Working Session System, according to an example;
**Fig. 12** schematically illustrates different working configurations.

### Description of particular embodiments of the invention

In the following detailed description, numerous specific details are set forth by way of examples in order to provide a thorough understanding of the relevant teachings. However, it should be apparent to those skilled in the art that the present teachings may be practiced without such details. In other instances, well known method, procedures, and/or components are described at a relatively high-level, without detail, in order to avoid unnecessarily obscuring aspects of the present teachings.

The following description of the exemplary embodiments refers to the accompanying drawings. The following detailed description does not limit the invention. Instead, the scope of the invention is defined by the appended claims. In various embodiments as illustrated in the figures, a computing device, a corresponding method and a corresponding computer program are discussed.

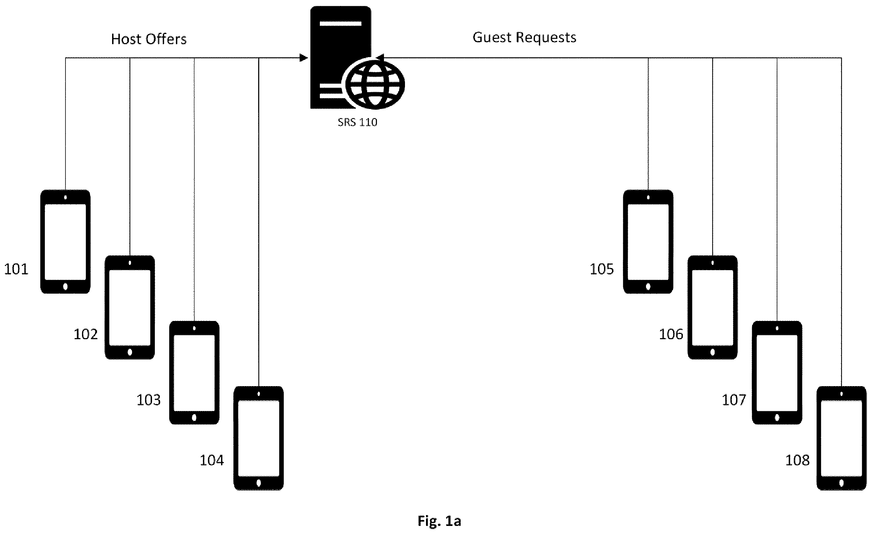

**Fig. 1a** schematically illustrates a Co-Remote Working Session scheduling and reservation example scenario. A plurality of Host Users may send Host Offers using Terminals 101-104 to a Scheduling and Reservation Server (SRS) 110, also to be called

Scheduler 110. Accordingly, a plurality of Guest Users may send Guest Requests using Terminals 105-108 to the Scheduling and Reservation Server (SRS) 110. The Terminals 101-108 may be any type of device connectable to a wired or wireless internet connection. The SRS 110 may be a dedicated or distributed computing system, a physical or virtual server (e.g., a cloud server) etc. As utilized herein, the terms "component", "system", "client" and the like are intended to refer to a computer-related entity, either hardware, software (e.g., in execution), firmware, or a combination thereof. For example, a component can be a process running on a processor, an object, an executable, a program, a function, a library, a subroutine, a computer, or a combination of software and hardware. By way of illustration, both an application running on a server and the server can be a component. One or more components can reside within a process and a component can be localized on one computer and/or distributed between two or more computers. The term "processor" is generally understood to refer to a hardware component, such as a processing unit of a computer system.

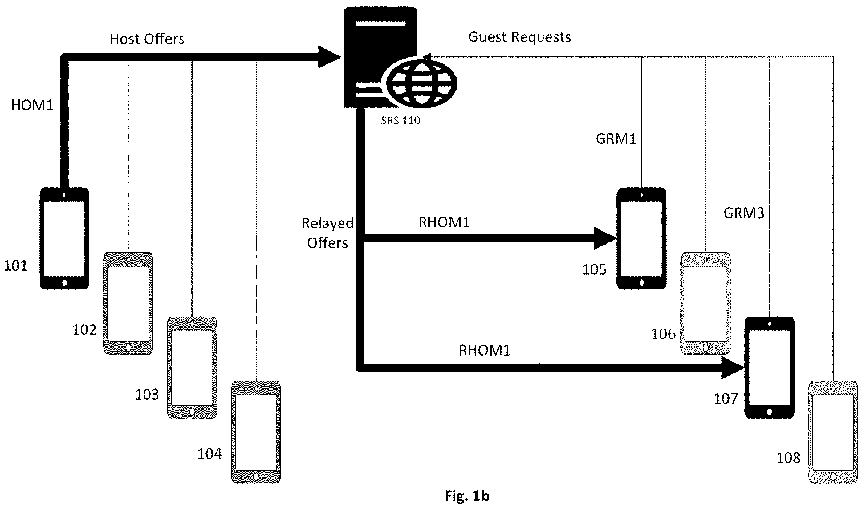

The SRS 110 may analyze the Host Offers and the Guest Requests in order to identify matches. In **Fig. 1b** Host Offer HO1 is matched with Guest Requests GR1 and GR3. Thus, the SRS 110 may transmit a Relayed Host Offer RHOM1 to the Terminals 105 and 107 whose Guest Requests' GRM1 and GRM3 characteristics match the Host Offer HOM1 characteristics. Any Relayed Host Offers may be identical to the original Host Offers sent by the Host Users or they may contain additional information appended by the SRS 110. Thus, a Host User may store once with the SRS 110 data associated to the Host User's profile (e.g. name, affiliation, age, gender etc.) as well as data associated to the Offered Space Profile (e.g. address, space characteristics etc.). The SRS 110 may then append such data to a received Host Offer before sending the Relayed Host Offer to the matched Guest User.

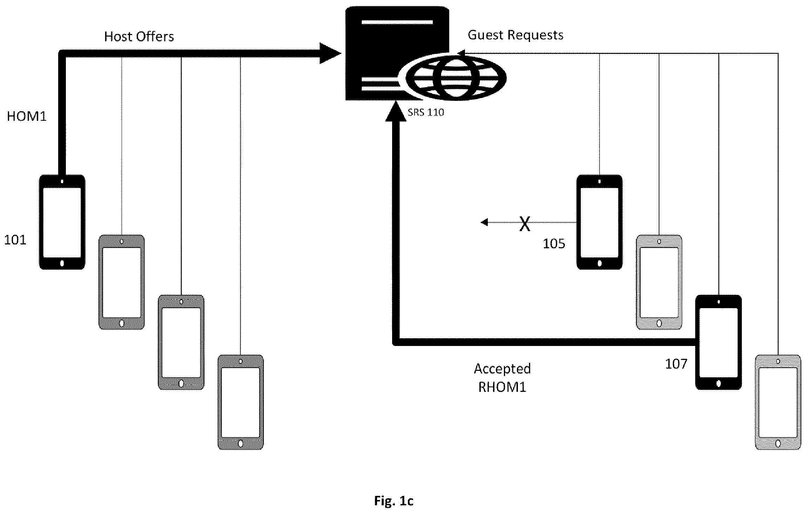

In **Fig. 1c** the Guest User of the Terminal 107 accepts the Relayed Host Offer RHOM1 and informs the SRS 101 accordingly by sending an acknowledgment message. The Guest User of the Terminal 105 may reject the Relayed Host Offer HOM1 or may simply be late, compared to the Guest User of Terminal 107, and therefore any acceptance after the acceptance of the Guest User of the Terminal 107 may be rejected by the SRS 110 as late.

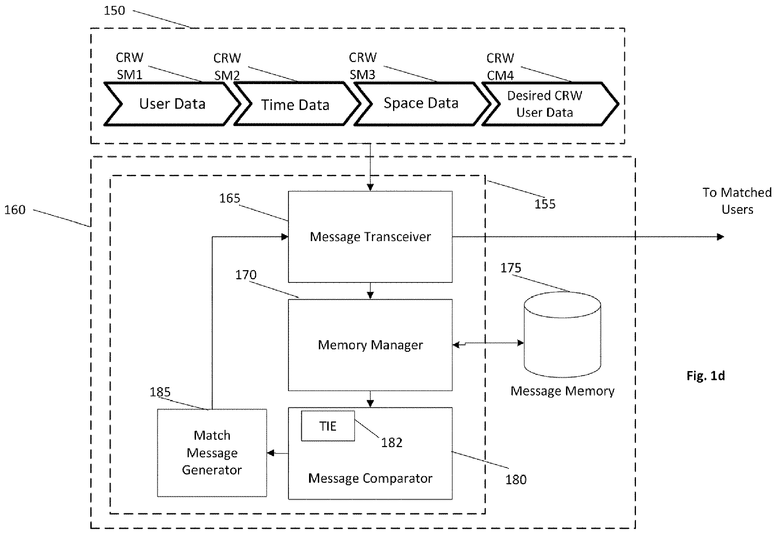

**Fig. 1d** schematically illustrates a co-remote working session scheduling system according to an example. The co-remote working session scheduling system 160 comprises a co-remote working session scheduler 155 coupled to Message Memory 175. In other examples, the Message Memory 175 may be part of the scheduler 155. Scheduler 155 comprises a Transceiver 165, configured to receive co-remote working session messages from host and guest users and transmit co-remote working session match messages to matched users. Said received co-remote working session messages may comprise: (i) first co-remote working session user data (CRWSM1), (ii) first co-remote working session time (CRWSM2) and space (CRWSM3) data, and (iii) first desired co-remote working user data (CRWCM4). The Transceiver 165 is coupled to Memory or Message Manager 170. The Message Manager 170 is configured to store and retrieve messages stored in Memory 175. The Memory 175 may comprise at least two partitions or stacks, one for Co-Remote Working Session Host Offer Messages and another for Co-Remote Working Session Guest Request Messages. The Memory Manager 170 is coupled to Message Comparator 180. The Memory Manager 170 provides pairs of messages to Message Comparator 180. Each pair may comprise a received first co-remote working session message and a second co-remote working session message retrieved from the memory. The Memory Manager 170 may identify the message received by the Transceiver 165. Depending on the received message type, HOM, GRM or ORM, the Memory Manager 170 will retrieve messages from the corresponding Memory 175 partition to form pairs. For example, if the received message is a HOM message then the Memory Manager 170 will retrieve GRM messages to form received HOM - retrieved GRM pairs, and vice versa. The Message Comparator 180 is configured to perform comparisons between said two messages and generate compatibility scores based on said comparisons. To perform the comparisons, the Message Comparator 180 may comprise a Tag Identifier and Extractor (TIE) 182. Said TIE 182 may identify each tag of the messages of the pairs forwarded by the Memory Manager 170, with an aim to compare each corresponding tag pair and generate a compatibility score for each tag pair. Some tags may be mutually exclusive. That is, absence of a corresponding tag may indicate incompatibility of the messages. A tag may be present but disactivated (using an activation deactivation bit as described in more detail hereinbelow). A disactivated tag may also indicate incompatibility of messages if the corresponding tag of the comparing message is activated. Then the Message Comparator 180 may inform the Memory Manager 170 that the members of the pair do not match and request from the Memory Manager 170 another pair or another message to be retrieved from the Memory 175 to form a pair with the received message. Other tags may be optional. Presence of the corresponding optional tag may generate a higher score whereas absence of such corresponding optional tag may generate a lower (but non-zero) score. If all the pairs are exhausted, i.e., if the Message Comparator fails to qualify a pair as compatible or all the compatibility scores generated are below a predefined threshold, then the Message Comparator 180 may inform the Memory Manager 170 and the Memory Manager 170 will store the received message in the corresponding partition or stack of the Memory 175.

The Message Comparator 180 is coupled to a Match Message Generator 185. The Match Message Generator 185 receives the compatibility scores and generates co-remote working session match messages based on said compatibility scores when the compatibility score exceeds a predetermined threshold. It may happen that for a given received message there are more than one retrieved corresponding messages generating compatibility scores exceeding said threshold. In such cases, depending on the rules, the Match Message Generator 185 may generate a co-remote working session match message for the pair having the highest compatibility score and/or use other criteria, e.g., the time a retrieved message is stored in the memory, session history of the matched users, etc. The match messages may comprise data related to the match (User Data, Space Data etc.) extracted from the matched pair messages but may further include additional data, e.g., a url address pointing to a map showing the shortest route between the matched users, photos of the users and/or the Co-Remote Working Space etc. Such data may be stored in a memory of the Scheduling System 160 or may be retrieved from an external memory, a cloud server etc. The Match Message Generator 185 is further coupled to the Transceiver 165. The Transceiver 165 receives the match messages from the Match Message Generator 185 and transmits them to the matched users.

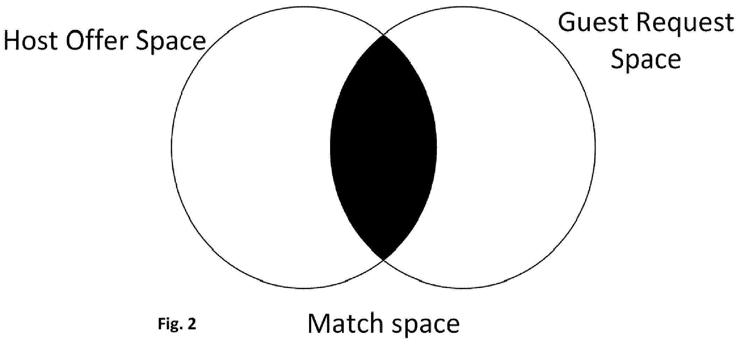

**Fig. 2** schematically illustrates the concept of the present invention, i.e., a Match Space is depicted as an intersection of Host Offers with Guest Requests. A plurality of Host Users create a virtual "Host Offer Space". Said Host Offer Space may be dynamically assembled by multiple Host Offers. Each Host Offer may correspond to an offer of a physical workspace (e.g., desk or room) made available by the respective host during a certain period of time (e.g., hour range, working day, working week). Accordingly, a plurality of Guest Users create a virtual "Guest Request Space". Said Guest Request Space may be dynamically assembled by multiple Guest Requests. Each Guest Request may correspond to a request for a physical space (e.g., desk or room) made available by the respective host during a certain period of time (e.g., hour range, working day, working week). The intersection of the two spaces corresponds to the "Match Space", where Host Offers and Guest Requests with matching characteristics meet.

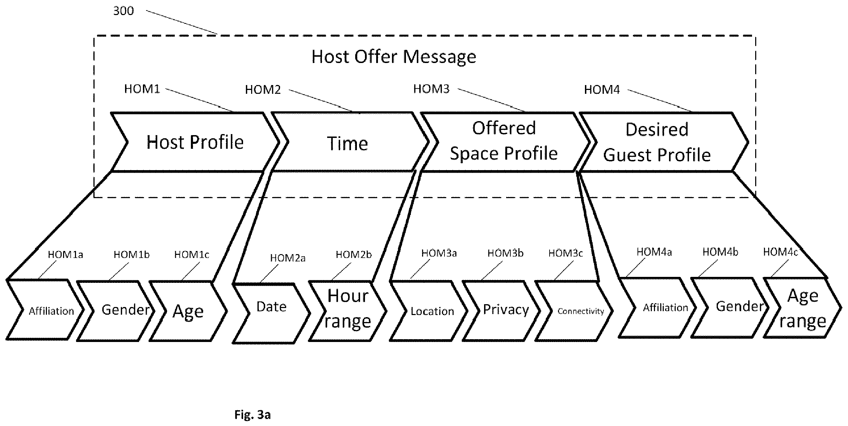

**Fig. 3a** schematically illustrates an example of a Host Offer Message (HOM). HOM 300 may comprise a first portion HOM1, a second portion HOM2, a third portion HOM3 and a fourth portion HOM4. HOM1 may comprise data corresponding to the Host Profile of the Host User, HOM2 of HOM 300 may comprise data corresponding to the Time the Offered Space is available, HOM3 of HOM 300 may comprise data corresponding to the Offered Space Profile and HOM4 may comprise data corresponding to the Desired Guest Profile.

More specifically, HOM1 may comprise data that correspond to characteristics of the Host User who is sending the HOM 300. For example, HOM1 may comprise three parts, HOM1a, HOM1b, HOM1c. The first part HOM1a may comprise Affiliation related data of the Host User. Such Affiliation data may be the company, the department and/or the profession of the Host User. Additionally or alternatively, HOM1a may comprise a User ID. Such User ID may be unique for each user. The SRS 110 may store data associated with the User ID (e.g., Affiliation related data similar to that mentioned hereinbefore).

The second part HOM1b may comprise Gender related data of the Host User. HOM1b may, for example, indicate whether the Host User is Male or Female. As some users may be more comfortable (co)working in the presence of users of a specific gender, for example the same gender as their own, such data in the message may help better filter Host Offers for potential guests. HOM1c may comprise Age related data. For example, HOM1c may indicate the age of the Host User. In a similar manner as with HOM1b, some users may be more comfortable (co)working in the presence of users of a specific age group, for example the same age group as their own, such data in the message may help better filter Host Offers for potential guests.

HOM1 may also comprise an extra part HOM1d (not shown), indicating whether the message is a HOM or ORM message.

HOM2 of HOM 300 may comprise data corresponding to the Time when the Offered Space is available. For example, HOM2 may comprise two parts, HOM2a and HOM2b. The first part HOM3a may comprise data corresponding to the date(s) that the offered space is available for a co-remote working session. For example, HOM2a may comprise data indicating a specific date or dates, recurring dates, a date range etc. Such data may be used by the SRS 110 during a matching process to designate the Offered Space(s) to Guest having similar or the most coinciding dates. The second part HOM2b may comprise data corresponding to characteristics of the hours during the day that the Offered Space may be available. For example, HOM2b may comprise data indicating that the Offered Space is available between certain hours, during a morning or afternoon shift etc.

HOM3 of HOM 300 may comprise data corresponding to the Offered Space Profile. For example, HOM3 may comprise three parts, HOM3a, HOM3b, HOM3c. The first part HOM3a may comprise data corresponding to the location of the offered space. For example, HOM3a may comprise data indicating the address of the building where the offered space is located. Such data may be used by the SRS 110 during a matching process to locate the Offered Spaces closer to a Guest. The second part HOM3b may comprise data corresponding to characteristics of the offered space. For example, HOM3b may indicate the number of offered places, level of privacy of the offered space, e.g., if the offered space is a shared desk, an individual desk in a shared room, a private room etc. The third part HOM3c may comprise data corresponding to the connectivity and/or amenities of the offered space. For example, HOM3c may indicate if there is wireless or wired internet available and at what speeds, whether there is an extra monitor, a telephone line, an office chair, a coffee machine etc. Additionally or alternatively, HOM3 may be associated with the User ID and may be stored by SRS 110. Thus, when a Host User sends a Host Offer, any Data related to the Offered Space Profile may be retrieved, matched with Desired Space Profiles from Guest Requests and added to the Relayed Host Offer Message when such a message is relayed to any Guests.

HOM4 may comprise Desired Guest Profile data, that is, HOM4 may comprise data that correspond to characteristics of the desired Guest User invited by the HOM 300. For example, HOM4 may comprise three parts, HOM4a, HOM4b, HOM4c. The first part HOM4a may comprise Affiliation related data of the Desired Guest User. Such Affiliation data may be the company, the department and/or the profession of the Desired Guest User. For example, the Host User may want to indicate that only colleagues from his company or even just his department are invited for a Co-Remote working session. Optionally, the Host User may create closed groups of Guest Users (e.g., preferred colleagues) and then HOM4 may comprise data associated with such a group. In one implementation the user may assign a group code to such a group and the SRS 110 may store a list of User IDs associated with the assigned group code. If such a group code is included in HOM4a, then the SRS 110 may retrieve the associated User IDs and match the Host Offer with potential Guest Requests from the respective Guest Users pertaining to the closed group. If such matches are present, then SRS 110 may relay the Host Offer to the matched Guest Users.

The second part HOM4b may comprise Gender related data of the Desired Guest User. HOM4b may, for example, indicate the Desired Guest User as Male, Female, Other or Not-relevant. HOM4c may comprise Age related data. For example, HOM4c may indicate an age range of the Desired Guest User.

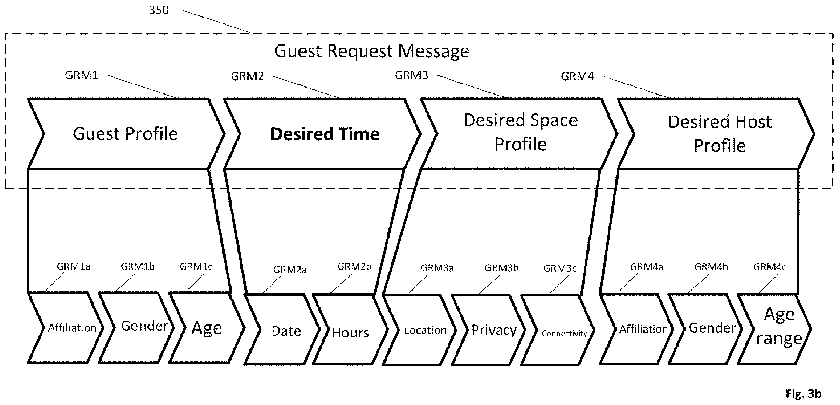

**Fig. 3b** schematically illustrates an example of a Guest Request Message (GRM). GRM 350 may comprise a first portion GRM1, a second portion GRM2 and a third portion GRM3. GRM1 may comprise data corresponding to the Guest Profile of the Guest User, GRM2 of GRM 300 may comprise data corresponding to the Desired Space Profile and GRM3 may comprise data corresponding to the Desired Host Profile.

More specifically, GRM1 may comprise data that correspond to characteristics of the Guest User who is sending the GRM 300. For example, GRM1 may comprise three parts, GRM1a, GRM1b, GRM1c. The first part GRM1a may comprise Affiliation related data of the Guest User. Such Affiliation data may be the company, the department and/or the profession of the Guest User. Additionally or alternatively, GRM1a may comprise a User ID. Such User ID may be unique for each user. The SRS 110 may store data associated with the User ID (e.g., Affiliation related data similar to that mentioned hereinbefore for the Host User).

The second part GRM1b may comprise Gender related data of the Guest User. GRM1b may, for example, indicate whether the Guest User is e.g., Male or Female. As some users may be more comfortable (co)working in the presence of users of a specific gender, for example the same gender as their own, such data in the message may help better filter Guest Requests for potential hosts. GRM1c may comprise Age related data. For example, GRM1c may indicate the age of the Guest User. In a similar manner as with GRM1b, some users may be more comfortable (co)working in the presence of users of a specific age group, for example the same age group as their own, such data in the message may help better filter Guest Requests for potential hosts.

GRM1 may also comprise an extra part GRM1d (not shown), indicating whether the message is a GRM or ORM message.

GRM2 of GRM 300 may comprise data corresponding to the Desired Space Profile. For example, GRM2 may comprise three parts, GRM2a, GRM2b, GRM2c. The first part GRM2a may comprise data corresponding to the location of the desired space. For example, GRM2a may comprise data indicating the city, the area, the suburb or the distance from the Guest User's location where the desired space is to be found. Such data may be used by the SRS 110 during a matching process to locate the Offered Spaces closer to a Guest. The second part GRM2b may comprise data corresponding to characteristics of the Desired Space. For example, GRM2b may indicate the level of privacy of the offered space, e.g., if the Desired Space is a shared desk, an individual desk in a shared room, a private room etc. The third part GRM2c may comprise data corresponding to the connectivity and/or amenities of the Desired Space. For example, GRM2c may indicate if the guest requires a wireless or wired internet connection and at what speeds, whether the Guest needs a telephone line, an office chair, a coffee machine etc. Additionally or alternatively, GRM2 may be associated with the Guest's User ID and may be stored by SRS 110. Thus, when a Guest User sends a Guest Request, any Data related to the Desired Space Profile may be retrieved and matched with Offered Space Profiles from Host Offers.

GRM3 may comprise Desired Host Profile data, that is, GRM3 may comprise data that correspond to characteristics of the Desired Host User requested by the GRM 350. For example, GRM3 may comprise three parts, GRM3a, GRM3b, GRM3c. The first part GRM3a may comprise Affiliation related data of the Desired Host User. Such Affiliation data may be the company, the department and/or the profession of the Desired Guest User. For example, the Guest User may want to indicate that he prefers to have a Co-Remote Working Session only with colleagues from his company or even just his department. Optionally, the Guest User may create closed groups of Host Users (e.g., preferred colleagues) and then GRM3 may comprise data associated with such a group. In one implementation the user may assign a group code to such a group and the SRS 110 may store a list of User IDs associated with the assigned group code. If such a group code is included in GRM3a, then the SRS 110 may retrieve the associated User IDs and match the Guest Request with potential Host Offers from the respective Host Users pertaining to the closed group. If such matches are present, then SRS 110 may relay to the matched Guest Users only Host Offers from Host Users of the closed group.

The second part GRM3b may comprise Gender related data of the Desired Host User. GRM3b may, for example, indicate the Desired Host User as Male, Female or Irrelevant. Accordingly, GRM3c may comprise Age related data. For example, GRM3c may indicate an age range of the Desired Host User.

It is noted that the portions and parts of the HOM and GRM messages presented in the examples of Fig. 3a and Fig. 3b are only indicative and are presented to explain the capabilities of the proposed system. Other HOM and GRM messages may comprise less or more portions and each portion may comprise less or more parts depending on the case. For example, in some cases an "affiliation" part may not be necessary if all the co-remote workers belong to the same company. Accordingly, depending on cultural or other circumstances, a "Gender" or an "Age" portion may or may not be present and other portions may be present (e.g. "Smoker/Non-Smoker").

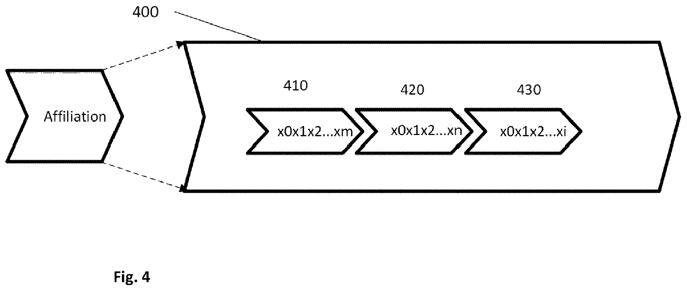

Each Host Offer Message (HOM) or Guest Request Message (GRM) may comprise multi-bit tags, each tag corresponding to the relevant message part. For example, **Fig. 4** schematically illustrates a multi-part tag 400 of an "Affiliation" part of a message. Such tag 400 may correspond to any of parts HOM1 a, HOM3a, GRM1 a or GRM3a as described hereinbefore. Tag 400 may comprise a first sub-tag 410. Sub-tag 410 may comprise a tag identifier, indicating presence of the tag in the message, and an activation bit (x0), indicating request to include the tag in the message. By setting the activation bit to 1, the user may indicate that the particular tag is to be used for matching purposes when the message is sent. The second sub-tag 420 may indicate the company of the user. For example, the sub-tag 420 may comprise a multi-bit (e.g. an m-bit) code associated with the company of the user. An extra activation bit may indicate request to use the specific sub-tag (i.e. company) for matching requests. Similarly, the third sub-tag 430 may indicate the department of the user inside the company. For example, the sub-tag 430 may comprise a multi-bit (e.g. an i-bit) code associated with the department of the user. An extra activation bit may indicate request to use the specific sub-tag (i.e. department) for matching requests. Other arrangements are possible depending on the structure of the affiliation of each user. For example, for freelancers, the corresponding tag may indicate the profession of the user or the professional affiliation (e.g., membership in a professional association) and indicate a request to have a co-remote working session with users sharing the same profession or association.

The use of tags in the Host Offer and Guest Request Messages allows for customization of the system. At a company level, a company may use tags grouping together employees that share a location (e.g., City) or profession (e.g., Sales) thus facilitating matching of employees with similar characteristics. In a similar manner, Professional or Student Associations may generate tags that bring users with similar characteristics together. For example, Freelance Translators, Software Developers, Lawyers, Engineers, Students of the same faculty etc.

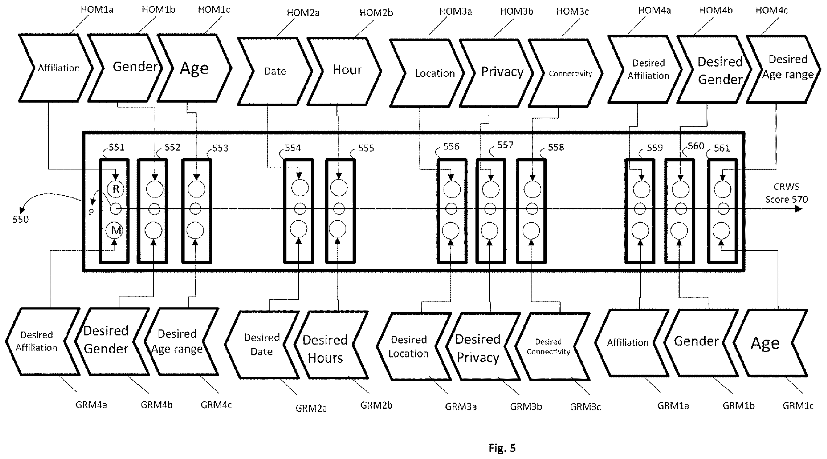

**Fig. 5** schematically illustrates a Message Matching Process Configuration. A HOM message, e.g., HOM 300, is matched with a GRM message, e.g., GRM 350 by Message Comparator (MC) 550. MC 550 may comprise multiple Comparator Modules (CM) 551-561. Each CM may be programmed to compare corresponding tags of the HOM and GRM messages and generate a score. The Message Comparator 550 may extract the corresponding parts of the HOM and GRM messages and direct them to the respective CMs. Each CM may apply matching rules corresponding to the respective message part pair. For example, during the matching process the Affiliation part HOM1a is matched with the Desired Affiliation part GRM4a. If the Host User has indicated in HOM1a that they offer a Co-Remote working session only for people of their department B of company A and the Guest User has indicated in GRM3a that (s)he is requesting a Co-Remote working session with anyone from the entire company A, then an Affiliation Match is present. The corresponding CM 551 may then output a score equal to 1. In case the HOM1a limitations do not correspond with the limitations of GRM4a, then CM 551 may output a score equal to 0. That could be the case if the Host User sending the HOM 300 belongs to a different department than the Guest User who sent the GRM 350 and they both indicated that the want a Co-Remote working session only with colleagues of their respective department. Accordingly, if Gender part HOM1b indicates e.g., a Female, i.e., that the Host User is a Female, and the Gender part GRM3b indicates that the Desired Host User is also to be a Female, then a Host Gender Match is present and the corresponding CM 552 may output a score equal to 1. Similarly, if the age of the Host User indicated in HOM1c matches (is within) the age range indicated in GRM4c, then a Host Age Match is present.

The CMs 551-561 may output a 0 when there is no concordance between the respective tags and a 1 otherwise. However, CMs 551-561 may also output values between 0 and 1 when there is partial concordance. This may be particularly useful if more than one matches are present in the system. Then the match with the highest overall score shall take precedence over the other matches. This will be illustrated with examples of Time and Location tags.

HOM2a Date tag may concord 100% with GRM2a Date tag and the respective CM 554 may output a 1. However, the HOM2b Time tag may only partially concord with GRM2b Time tag. For example, the Host User may have indicated in HOM2b that 8 hours, e.g., the hours from 9:00 to 17:00, are offered for a Co-Remote Working Session. The Guest User may have indicated in GRM2b that (s)he is requesting a Co-Remote Working Session only for 3 hours, e.g., 9:00-12:00. Then the CM 555 may calculate the fraction of requested hours in GRM2b with respect to the offered hours in HOM2b, i.e., 3/8. Thus, the score output of CM 555 may be 3/8. In case another Guest User requests more hours leading to a fraction higher than 3/8 then, assuming all other scores are equal, the MC 550 will provide an overall higher score for the Guest User requesting more hours.

Accordingly, the Location part of HOM3 and GRM3, a match is present if, e.g., the address of the Offered Space as indicated in HOM3a is within a radius indicated by the corresponding tag in GRM3a or, if only a city tag is present in GRM3, if the address of the offered space as indicated in HOM3a is within the city indicated in GRM3a etc. Now if two Guest Users have GRM messages matched with the HOM message, then the CM 556 may calculate the distance of each user from the Host User's location and generate a score accordingly. For example, both Guest Users may have indicated the same city (or part of a city) as Desired Location and the Host User may indeed be in that (part of the) city and may have indicated a radius of 10km from his/her Offered Space Location. Then if the First Guest User is 2km away from the location of the Host User and the Second Guest User is 3km away, then the CM 556 may calculate a score as 1-(distance/radius). For example, if the city has a radius of 10km, then the first Guest User will receive a score of 1-2/10=0.8 whereas the second Guest User will receive a score of 1-3/10=0.7. Thus, the first Guest User being closer to the Host User's Location will receive a higher score.

For the Space part of HOM2b and GRM2b, a match is present if the requirements of the Guest User are met by the Offered Space. For example, if HOM3b indicates a private room and GRM3b has indicated either a Private Room or Any Space, then a match is present, i.e., the corresponding CM 557 may output a "1". On the contrary, if HOM3b has indicated a Shared Desk and GRM3b has requested a Private Room, then no match is generated, i.e., the corresponding CM 557 may output a "0". Similar considerations are to be expected for the connectivity and amenities part HOM3c of the Host Offer Message and corresponding part GRM3c of the Guest Request Message. For the pairs HOM4a-GRM1a, HOM4b-GRM1b, HOM4c-GRM1c the same rules apply as discussed for HOM1 and GRM3, respectively.

The MC 550 or each CM module or component may include a receiver (R), a processor (P) and a memory (M). The processor may be a hardware device for executing software, particularly software stored in the memory. Said software may provide rules for each CM module. The processor can be any custom made or commercially available general purpose processor, a central processing unit (CPU), commercially available microprocessors including a semiconductor based microprocessor (in the form of a microchip or chipset), microcontroller, digital signal processor (DSP), application specific integrated circuit (ASIC), field programmable gate array (FPGA) or other programmable logic device, discrete gate or transistor logic, discrete hardware components, state machine, or any combination thereof designed for executing software instructions known to those of ordinary skill in the art.

The memory is (or comprises) a non-transitory (or non-volatile) computer readable medium (or recording medium). The memory can include any one or a combination of volatile memory elements (e.g., random access memory (RAM, such as DRAM, SRAM, or SDRAM)) and nonvolatile memory elements (e.g., ROM, EPROM, flash PROM, EEPROM, hard drive, magnetic or optical tape, memory registers, CD-ROM, WORM, DVD, redundant array of inexpensive disks (RAID), another direct access storage device (DASD), or any other magnetic, resistive or phase-change nonvolatile memory). Moreover, the memory may incorporate electronic, magnetic, optical, and/or other types of storage media. The memory can have a distributed architecture where various components are situated remote from one another but can also be accessed by the processor. Further, the memory may be remote from the device, such as at a server or cloud-based system, which is remotely accessible by each CM 551-561 or the MC 550. The memory is coupled to the processor, so the processor can read information from and write information to the memory. In the alternative, the memory may be integral to the processor. In another example, the processor and the memory may both reside in a single ASIC or other integrated circuit.

In the example of Fig. 5, each GRM part is stored in the Memory M of the corresponding CM and each HOM part is received by the Receiver R of the corresponding CM. They are then processed by the corresponding processor P. In other examples, the HOM parts may be stored in the corresponding Memories M and the GRM parts may be received by the corresponding Receivers R.

The output of all CM modules 551-561 may be combined, generating an aggregate Co-Remote Working Session (CRWS) Score 570 at the output of the MC 550. An aggregator (not shown) may receive all the outputs of the CM modules and sum them to generate the CRWS Score 570. The aggregator may use weighing constants so that each tag score may have different weight in the aggregate score 570.

Summarizing, a match is present if all parts of an HOM message match with all respective parts of a GRM message. Only then are the contents of an HOM message relayed to the Guest, and/or vice versa, for subsequent acceptance and creation of a Co-Remote Working Session.

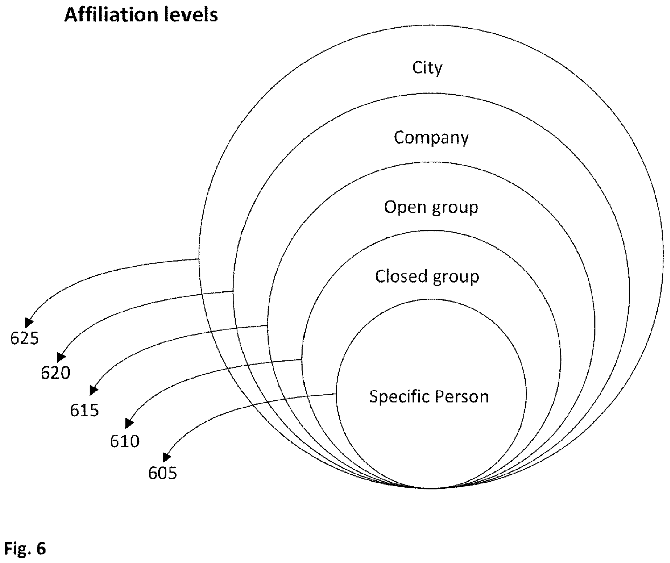

**Fig. 6** schematically illustrates different possible affiliation levels for Users, Desired Host Profiles and Desired Guest Profiles, according to an example. The first level, the inner circle 605, corresponds to the Specific Person level. That is, a Host User may indicate that their HOM message is directed to a specific Guest User. Then, only if the specific Guest User has sent a GRM message that matches the characteristics of the HOM message of the Host User a match may be generated. In a company scenario where the company needs to know, e.g., for liability purposes, from where each employee is working, two employees may want to create such a match so that the system is aware of the Co-Remote Working Session they have set up and only the two of them may be allowed to be matched by the system.

In a similar manner, a Host User or Guest User may indicate that they prefer to participate in a Co-Remote Working Session only with members of a Closed Group as indicated in circle 610. Such group may be an already established department of a company (e.g., the Sales Department, the Legal Department etc.) where a specific group of people is attributed to, or it may be assembled by individual members of a company (e.g., friends of the User). In the former case, an indication of the Department may suffice to define the members of the Closed Group. In the latter case, the User may need to indicate the individuals forming the Closed Group and a Group Code may be assigned to the Closed Group. Such a code may be generated by the User (e.g., by creating a tag known only to the members of the Closed Group) or by the System (e.g., SRS 110) using the User IDs of the indicated members of the Closed Group.

Accordingly, a Host User or Guest User may indicate that they prefer to participate in a Co-Remote working session only with members of an Open Group as indicated in circle 615. The members of the Open Group may not be associated via specific User IDs, as in the case of the closed group, but via specific characteristics of the group. For example, a User may indicate that his Offer or Request is open to all individuals pertaining to a specific Age group or Gender of the Company or Affiliation. Thus, any User meeting the constraints of the Host or Guest would be matchable with the Offer or Request, respectively.

Host Users or Guest Users may indicate that they prefer to participate in Co-Remote working sessions at another affiliation level which is the Company level as indicated in circle 620. The Company level is a broader Open Group but where any limitations or constraints may be imposed by the company and not by the individual User (Host or Guest). Thus, a Company may limit the number of days any individual is allowed to work remotely or co-work remotely, the number of Co-Remote working Sessions per month etc.

Finally, for users who are not constrained by a Company or Affiliation and who perhaps feel adventurous, any User of the system in their city or Geographical location, as indicated in outer circle 625, may be offered or requested a Space and the level of Affiliation is largely the participation in the System.

It is to be understood that other intermediate affiliation levels may be possible and the examples presented herein are for illustrative purposes only.

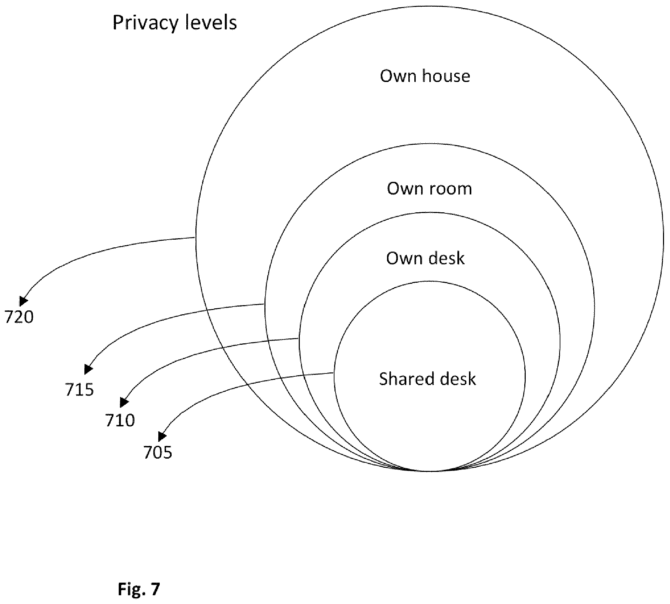

**Fig. 7** schematically illustrates different possible Privacy Levels for Offered Space Profiles and Desired Space Profiles, according to an example. The first level, indicated by inner circle 705, corresponds to the Shared Desk Space Profile. That is, a Host User may indicate that the space offered is a desk that will be shared by the Host User and the Guest User during a Co-Remote working Session. The second level, indicated by circle 710, corresponds to the Own Desk Space Profile. That is, a Host User may indicate that the space offered is a desk that will be individually occupied by the Guest User during a Co-Remote working Session. Such an indication may imply that the Own Desk may be in the same room or area where the Host User will or may be present. The third level, indicated by circle 715, corresponds to the Own Room Space Profile. That is, a Host User may indicate that the space offered is a Room that will be individually occupied by the Guest User during a Co-Remote working Session. Such an indication may imply that the Guest User and the Host User will or may have their own private areas or Rooms during the Co-Remote Working Session. Finally, the broadest Privacy level, indicated by outer circle 720, corresponds to the Own House level. Such Privacy Level is envisaged for cases where the Host User will or may be only partially present in the House. For example, in case of Host Users whose profession requires them to often be outside, e.g. visiting clients, the Host User may indicate that the Guest User will largely have an extended Privacy level during the day and during the hours where the Host User will be absent.

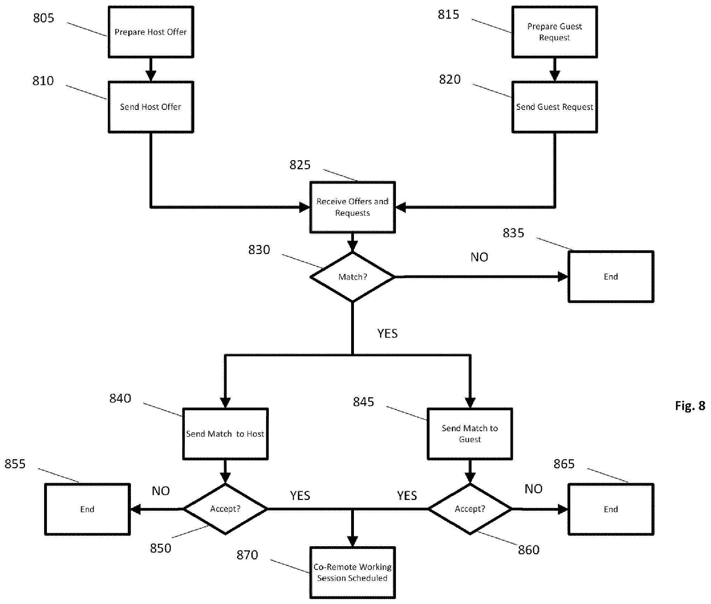

**Fig. 8** schematically illustrates a method of creating a Co-Remote Working Session according to an example. In step 805, a Host User may Prepare a Host Offer. Such a Host Offer may comprise an electronic HOM message substantially as described hereinbefore. In step 810, once the Host Offer is prepared, the Host User may transmit the HOM message of the Host Offer to the Matching Server. Transmitting the HOM message to the Matching Server may comprise logging-in to the Matching Server for identification and authorization purposes. In parallel, a Guest User may Prepare a Guest Request in Step 815. Such a Guest Request may comprise a GRM message substantially as described hereinbefore. In step 820, once the GRM message is prepared, the Guest User may transmit the Guest Request to the Matching Server. Transmitting the GRM message to the Matching Server may also comprise logging-in to the Matching Server for identification and authorization purposes. In step 825, the Matching Server may receive the Host Offer and the Guest Request and stores them until a Match is found or until the Offer or Request expires. It is understood that the Matching Server may receive multiple Host Offers and Multiple Guest Requests at any given time. Then in step 830 the Matching Server may analyze the received Host Offers and the Received Guest Requests to identify a Match. Analyzing may comprise identifying the type of message received (HOM, GRM or ORM) and extracting the tags of each message to perform tag comparison as described hereinbefore. If no Match is identified, then the Matching process may end in step 835 and the system may be put on Stand-By, waiting for more HOMs or GRMs. Each time a new Host Offer or a Guest Request is received the Matching Server repeats the analysis with an aim to generate a Match. Now, when a match is identified, i.e., when a Host Offer and a Guest Request are found to meet the corresponding constraints, then a Match is present and the corresponding match messages are prepared and relayed to the matching Users. That is, in step 840 the Matched Guest Request is relayed to the Host User and in step 845 the Matched Host Offer is relayed to the Guest User. The relayed messages may comprise more data than the corresponding messages sent by the users. They may for example include url links, directions, maps, photos or other relevant information. Once the Host User receives the Matched Guest Request, (s)he may accept or reject the match in step 850. If the Host User rejects the match, then the process ends in step 855. Accordingly, once the Guest User receives the matched Host Offer, (s)he may accept or reject the match in step 860. If the Guest User rejects the match, then the process ends in step 865. If both Users accept the Match then a Co-Remote working Session is generated in step 870. Relaying the Host Offer to the matched Guest User and the Guest Request to the Host User may be done simultaneously or sequentially. That is, the Matching System may provisionally send the Match to both users and inform them that the Co-Remote working Session will be set up only when both have accepted the Match. Alternatively, the Matching System may send the Match to a first of the two Users first, wait for the User to accept the Match and then relay the Match to the second User with an indication that the other User has already accepted the Match.

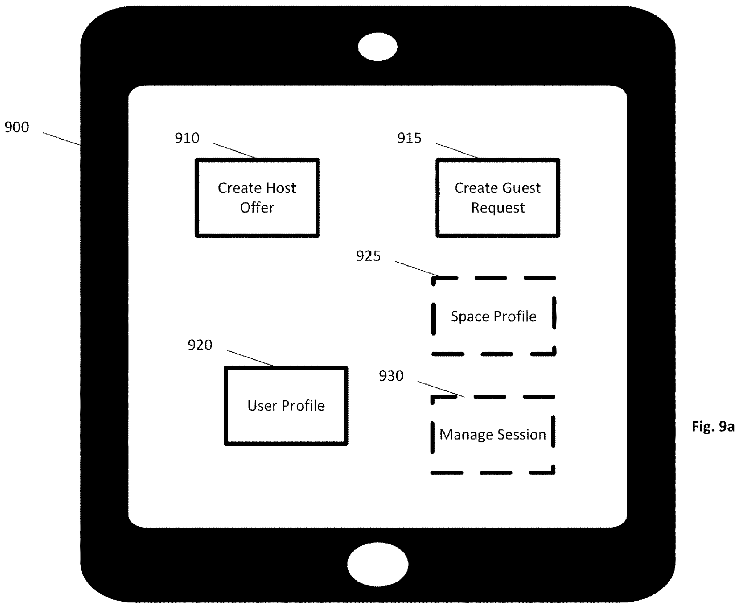

**Fig. 9a** schematically illustrates an instance of the Co-Remote working Session User application, according to an example. The application may be a desktop, a mobile or a web application. In the example of Fig. 9a, a User may download and install the Co-Remote Working Session (CRWS) application to his/her Terminal 900 (e.g. mobile phone, tablet, Personal Computer, Laptop etc.). After launching the CRWS Application, the User may log in with User credentials. Logging in automatically may generate User Profile tags for HOM, GRM or ORM messages by downloading the relevant data from a Co-Remote Working Session Platform (explained below). A set of Rules and allowable tags may also be downloaded after login. The user may then be presented with the following options: Create Host Offer 910, Create Guest Request 915, User Profile 920 and Space Profile 925. In some implementations the User may also be provided with another option to create an ORM message. During the first use, the User may be asked to set up the User Profile and, optionally, the Space Profile if the User intends to be a Host User. If the User is acting only as a Guest User, then there may be no need to set up a Space Profile as any requirements for the Desired Space may be added during the preparation of the Guest Request Message. If the User has any Co-Remote Working Sessions active (either pending or future ones) then the User may be presented with an option 930 to Manage such Session. Managing an active Session may include viewing, deleting, repeating the Session etc.

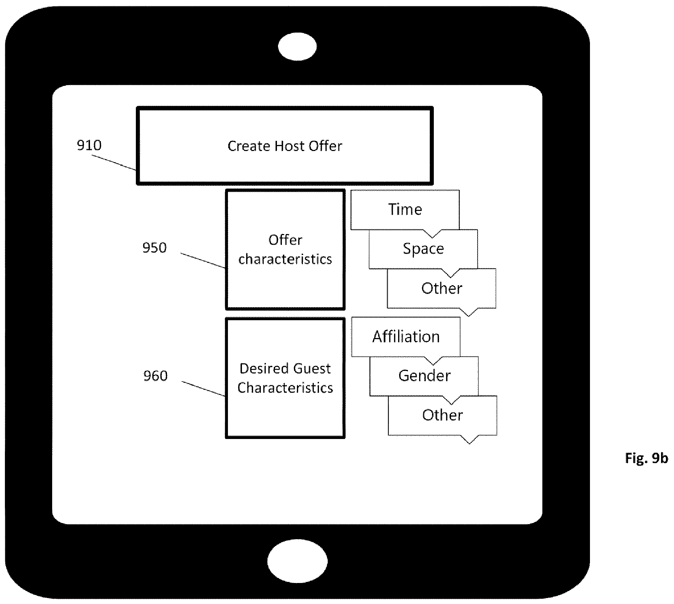

**Fig. 9b** schematically illustrates a Host Offer generation instance of a Co-Remote working Session User application, according to an example. When selecting to create a Host Offer, a User may be presented with a set of options.

A first option presented may be to fill in the Offer characteristics field 950. A first such set of the Offer characteristics may be the Time characteristics of the Host Offer, e.g. Date and Hours or Date Ranges and Hour Ranges to generate Time tags for the HOM message. A second set may be the Space characteristics. Space characteristics may include the Privacy Level, Communication equipment etc. A third set of Characteristics may include additional Characteristics of the Host Offer (e.g. if there is food and beverages included, music equipment, pets etc.).

A second option may be to fill in the Desired Guest Characteristics 960 field to generate the Desired Guest tags of the HOM message. A first set of the Desired Guest Characteristics may be the Affiliation of the Desired Guest. The Host User may indicate the Affiliation Level of the Desired Guest substantially as described hereinbefore with reference to Fig. 6. That is, the Host User may indicate if he prefers a Specific Individual (by adding or selecting a name or a User ID corresponding to the Specific Individual), individuals from a Closed Group (by adding the names or User IDs or code of the Closed Group), individuals from an Open Group or from the Host User's Company, or if "any" User of the system is invited. In some implementations, when the Application is provided through a corporate account, such an option may not be available. A second set of Desired Guest Characteristics may be related to the Desired Guest's Gender or Age Group. A third set of Desired Guest Characteristics may be related to other criteria related to the Desired Guest such as Desired Guest habits (e.g. smoker/non-smoker, sports habits etc.). For example, a Host User may compose a Host Offer where the Desired Guest may share a same sport or musical activity with the Host, thus allowing the two to train or practice together during a break etc. Depending on the implementation, only predefined/authorized tags may be available (e.g. in an organizational/company deployment of the application) or the User may be allowed to create custom tags (e.g. in an open/freelance user deployment scenario with no strict rules).

The application may compose the HOM, GRM or ORM message by using a concatenating component to concatenate the selected tags and by appending to the message any other tags that are required based on the rules. For example, in an organizational/company deployment the "affiliation" tag may be preselected (e.g. indicating that only company employees may join Co-Remote Working Sessions). The application then may provide the user with a summary of the user-selected and/or preselected tags before sending the message to the SRS server for matching.

The application may also allow the generation and storage of messages for future or recurring use.

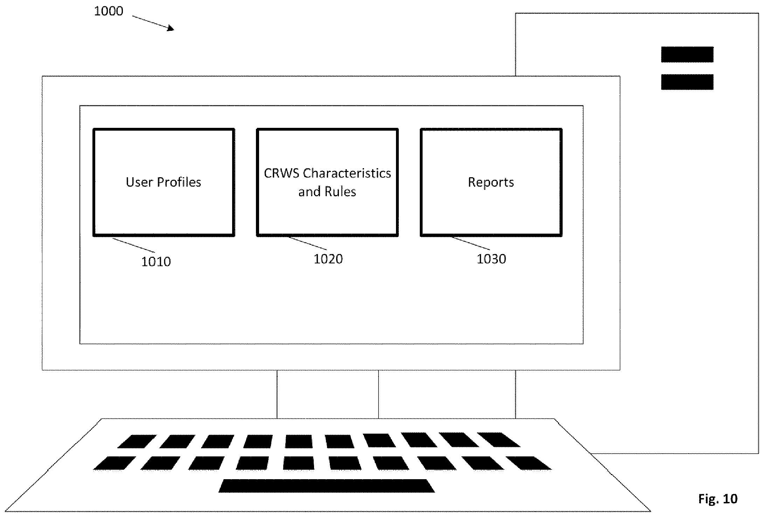

**Fig. 10** schematically illustrates a central administration set-up of the system, according to an example. In a company or organization setting, the proposed invention may be administered by a centralized computerized Co-Remote working Session Platform 1000. Such a platform may provide and store User IDs and User Profiles using User Profiles module 1010, may define and limit the Co-Remote Working Session characteristics and rules (e.g. allowable tags, frequency of co-remote working etc.) by using CRWS characteristics and Rules 1020 and may issue Reports regarding the usage of the system by using the Reports module 1030. It may also provide an accurate account of the Remote Working status of each employee. The Users may login to the Co-Remote working Session Platform 1000 using their mobile or web applications to receive their User IDs or Profiles and the Rules when they create sessions. The Co-Remote Working Session Platform may in some implementations also host the CRS server that communicates with the Users to receive Host Offers and Guest Requests and generates Co-Remote working Sessions. However, in other implementations, the CRS Server may be provided as a Service and the Co-Remote Working Session Platform may be connected or communicate with the CRS Server to provide the User Profiles and the Co-Remote Working Session Characteristics and Rules whereas the CRS Server may transmit any Matches to the Co-Remote Working Session Platform for Reporting purposes.

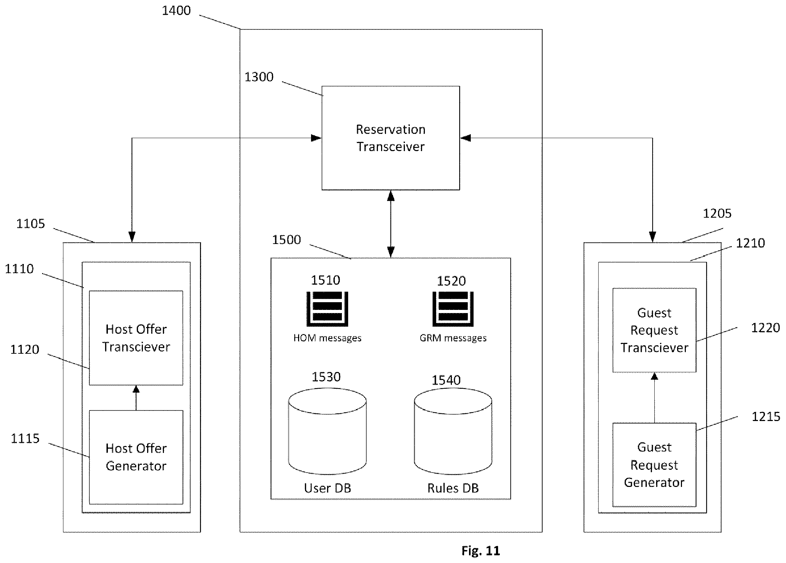

**Fig. 11** schematically illustrates a Co-Remote Working Session System according to an example. A Host User Terminal 1105 may comprise or have access to a Co-Remote Working Session Application 1110. The Co-Remote Working Session Application may comprise a Host Offer Generator module 1115 and a Host Transceiver module 1120. The Host Offer Generator module may assemble a HOM message based on options selected/edited by the Host User. Assembling a HOM message may comprise concatenating user-selected/pre-selected tags or selecting preassembled messages (e.g. prepared for previous sessions) and updating the timing data of the message. The Host Offer Transceiver Module 1120 may send the HOM message to Reservation Transceiver 1300 of CRS Server 1400. Similarly, A Guest User Terminal 1205 may comprise a Co-Remote working Session Application 1110. The Co-Remote Working Session Application may comprise a Guest Request Generator module 1215 and a Guest Transceiver module 1220. The Guest Request Generator module may assemble a GRM message based on options selected/edited by the Guest User. The Guest Transceiver Module 1220 may then send the GRM message to Reservation Transceiver 1300 of CRS Server 1400.

The Reservation Transceiver may form part of CRS 1400 or may be an intermediate collection server of messages performing authentication and/or pre-processing of the messages. For example, the Reservation Transceiver may be hosted by a Co-Remote Working Session Platform for logging or checking of allowable messages based on a company's policy. The Reservation Transceiver 1300 may be connected with Matching Analyzer 1500 of CRS Server 1400. The Matching Analyzer 1500 may receive the HOM and GRM messages from Reservation Transceiver and analyze the messages to identify matches. The Matching Analyzer 1500 may comprise a first memory 1510 to store the HOM messages, a second memory 1520 to store the GRM messages, a User DB 1530 to store User Profiles and Space Profiles and a Rules DB 1540 to store Matching Rules. Matching rules may relate to priorities when generating matches, conflict resolutions etc.

The Matching Analyzer 1500 may comprise a processor and a programmable memory that stores instructions to execute Matching operations. For example, an incoming HOM message may be compared with each GRM message in the GRM memory 1520 according to Rules (programmable instructions) provided by the Rules DB 1540. For example, the Rules DB may provide the order of priority to which such messages may be compared. In one example, a Rule may indicate that an incoming HOM message is to be compared first with all GRM messages from the same Affiliation (e.g., Company or Organization) and only if there is no match to continue with the rest of the messages. For each HOM-GRM message pair, the Matching Analyzer may then proceed with analyzing the concordance of each part of the HOM message with the corresponding GRM message. If there is concordance, then the subsequent part is analyzed until a match is produced or a non-concordance is found. If a match is produced, then the Matching Analyzer 1500 forwards a Match Message to the Reservation Transceiver 1300 including the Relayed HOM message and the Relayed GRM message. The Reservation Transceiver 1300 may then relay the Relayed HOM message to the Guest Terminal 1205 informing of a Match and the Relayed GRM message to the Host Terminal 1105, accordingly. If the Match is acknowledged and accepted by the implicated Users respective ACK messages are sent to the Reservation Transceiver 1300 and the Matching Analyzer 1500 removes the corresponding HOM and GRM messages from the respective memories 1510 and/or 1520.

The Users then have a Co-Remote Working Session generated and may communicate with each other using other channels to coordinate the Session or by using the Manage Session part of the User Application.

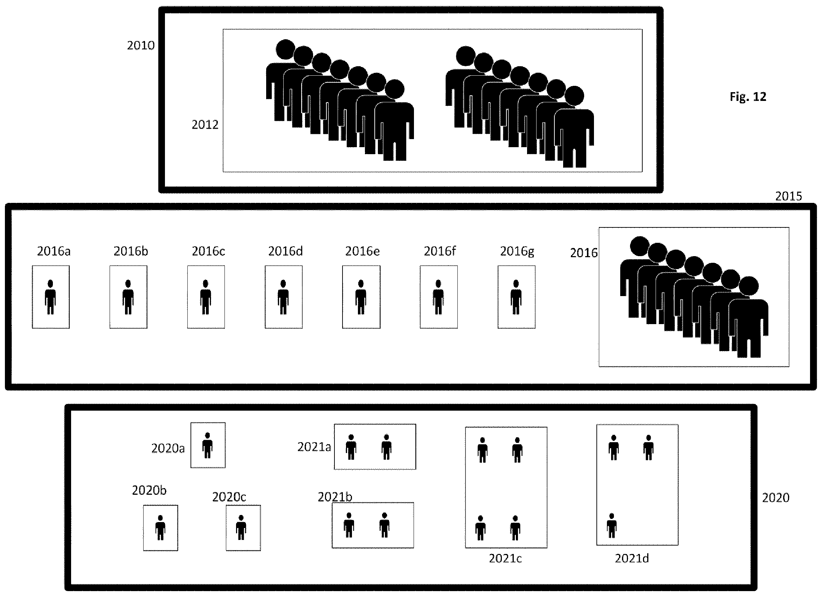

The proposed system provides a simple and secure way to generate Co-Remote Working Sessions. It allows for providing a simple and secure way for Users to participate in Co-Remote Working Session. Such session provide the benefits of Team Working, Remote Working and Co-Working while avoiding the negative aspects of isolation and disengagement. **Fig. 12** schematically illustrates different working configurations. In working configuration 2010, a group of employees, e.g., from the same company, are expected to work in the same office environment 2012. That is, all employees are expected to physically offer their services from a specific office location. This requires dedicated office spaces and commuting for all employees. In working configuration 2015, some employees are expected to offer their services from a specific location, e.g., office environment 2016, while others are allowed to remotely work from remote working locations 2016a-2016g. Such remote working locations may be the homes of the respective users or other co-working third-party spaces.

In the working configuration 2020, users are allowed to offer their services from, e.g., individual locations 2020a-2020c or from, e.g., co-remote working shared locations 2021a-2021 d. The organization of such shared locations is made possible through the proposed method and system of generating Co-Remote Working Sessions as described hereinbefore. It allows users to share their home locations with other colleagues, to host meetings and group sessions in a transparent and friendly way, abiding by personal preferences and company policies while avoiding isolation and loneliness. On the other hand, the organizations using such a system may benefit by reducing their office space while maintaining an office/colleague spirit and face-to-face or team participation.

## Claims

1. A method of organizing co-remote working sessions between individuals, comprising:
receiving at a co-remote working session scheduler a first co-remote working session message from a first terminal of a first user, said co-remote working session message comprising: (i) first user data, (ii) first co-remote working session time and space data, and (iii) first desired co-remote working user data;
comparing said received first co-remote working session message data with data from one or more other co-remote working session messages;
identifying a second co-remote working session message from said one or more other co-remote working session messages, said second co-remote working session message transmitted to the scheduler from a second terminal of a second user, said second co-remote working session message comprising (i) second user data, (ii) second co-remote working session space and time data, and (iii) second desired co-remote working user data, said second co-remote working session message having data compatible with said first co-remote working session message;
generating a match between said first co-remote working session message and said identified second co-remote working session message;
transmitting from the co-remote working session scheduler a co-remote working session match message to at least one of the first and second users.

2. The method according to claim 1, wherein the first co-remote working session message comprises a host offer message transmitted by a host terminal of a host user offering the co-remote working session, wherein:
the first user data includes data pertaining to the host user;
the first co-remote working session space data comprises data pertaining to an offered space for the co-remote working session and the first co-remote working session time data comprises data indicating when the offered space is available for the co-remote working session; and
the first desired co-remote working user data comprises data pertaining to a desired guest user to be hosted by the host user in the offered space during the co-remote working session.

3. The method according to claim 1, wherein the first co-remote working session message comprises a guest request message transmitted by a guest terminal of a guest user requesting the co-remote working session, wherein:
the first user data includes data pertaining to the guest user;
the first co-remote working session space data comprises data pertaining to desired space for the co-remote working session and the first co-remote working session time data comprises data indicating when the offered space is available for the co-remote working session; and
the first desired co-remote working user data comprises data pertaining to a desired host user offering the desired space during the co-remote working session.

4. The method according to any of claims 1 to 3, wherein said one or more other co-remote working session messages are retrieved by the co-remote working session scheduler from a local or remote storage memory.

5. The method according to any of claims 1 to 4, wherein comparing the first co-remote working session message with the second co-remote working session message comprises:
comparing the first user data with the second desired co-remote working user data to generate a first compatibility score;
comparing the first co-remote working session space and time data with the second co-remote working session space and time data to generate a second compatibility score; and
comparing the first desired co-remote working user data with the second user data to generate a third compatibility score,
wherein the first co-remote working session message is identified as compatible with the second co-remote working session message when each of the first, second and third compatibility scores exceeds a first, second and third predefined thresholds, respectively, and
wherein said first and second messages form a first pair and an overall first pair compatibility score is generated as a function of the first, second and third compatibility scores of the second message.

6. The method according to claim 5, further comprising identifying a third co-remote working session message having data compatible with said first co-remote working session message, said first and third messages forming a second pair and an overall second pair compatibility score is generated as a function of the first, second and third compatibility scores of the third message.

7. The method according to claim 6, wherein generating a match comprises generating a match between the first message and the message with the highest overall compatibility score.

8. A co-remote working session scheduler comprising:
a transceiver to receive co-remote working session messages from host and guest users and transmit co-remote working session match messages;
a message manager to store and retrieve messages stored in a memory;
a message comparator to perform comparisons between received co-remote working session messages and co-remote working session messages retrieved from the memory and generate compatibility scores based on said comparisons; and
a match message generator coupled to the message comparator to generate co-remote working session match messages based on said compatibility scores.

9. The co-remote working session scheduler according to claim 8, further comprising the memory to store the co-remote working session messages.

10. The co-remote working session scheduler according to claim 8 or 9, further comprising a first database to store the co-remote working session messages.

11. The co-remote working session scheduler according to any of claims 8 to 10, further comprising a second database to store user data and/or co-remote working session space data.

12. The co-remote working session scheduler according to any of claims 8 to 11, further comprising a third database to store co-remote working session rules.

13. The co-remote working session scheduler according to any of claims 8 to 12, wherein each message comprises thematic tags and where the message comparator comprises a tag extractor to identify, extract and compare corresponding tags of the received and retrieved messages, respectively.

14. The co-remote working session scheduler according to claim 13, wherein the message comparator comprises multiple comparator modules, each module configured to compare a tag pair and generate a compatibility score.

15. A computer implemented method of organizing co-remote working sessions between individuals, comprising:
receiving at a co-remote working session scheduler a first co-remote working session message from a first terminal of a first user, said co-remote working session message comprising: (i) first user data, (ii) first co-remote working session time and space data, and (iii) first desired co-remote working user data;
comparing said received first co-remote working session message data with data from one or more other co-remote working session messages;
identifying a second co-remote working session message from said one or more other co-remote working session messages, said second co-remote working session message transmitted to the scheduler from a second terminal of a second user, said second co-remote working session message comprising (i) second user data, (ii) second co-remote working session space and time data, and (iii) second desired co-remote working user data, said second co-remote working session message having data compatible with said first co-remote working session message;
generating a match between said first co-remote working session message and said identified second co-remote working session message;
transmitting from the co-remote working session scheduler a co-remote working session match message to at least one of the first and second users.
